# EUROPÄISCHE PATENTSCHRIFT

(11) **EP 2 795 155 B1**
(45) Veröffentlichungstag und Bekanntmachung des Hinweises auf die Patenterteilung: **10.02.2016**
(21) Anmeldenummer: 12812170.4
(22) Anmeldetag: 17.12.2012
(51) Int. Cl.: F16G 1/08, F16G 1/10, F16G 1/28, F16G 5/06, F16G 5/10, F16G 5/20

(54) **RIEMEN MIT MEHRSCHICHTIG IMPRÄGNIERTER TEXTILAUFLAGE**
BELT HAVING A MULTILAYER IMPREGNATED TEXTILE OVERLAY
COURROIE COMPRENANT UNE SURFACE D'APPUI MULTICOUCHE EN TEXTILE IMPRÉGNÉ

(30) Priorität: 20.12.2011 DE 102011121656
(43) Veröffentlichungstag der Anmeldung: 29.10.2014
(73) Patentinhaber: Arntz Beteiligungs GmbH & Co. KG, 37671 Höxter (DE)
(72) Erfinder: GIBSON, Daniel Pattie, 37671 Höxter (DE)
(74) Vertreter: Lins, Edgar
(86) Internationale Anmeldenummer: PCT/EP2012/005191
(87) Internationale Veröffentlichungsnummer: WO 2013/091808

(56) Entgegenhaltungen:
- EP-A2- 1 180 615
- WO-A1-2005/080820
- DE-A1-102010 017 782

## Beschreibung

Die Erfindung betrifft ein Kraftübertragungsriemen mit einem elastischen Unterbau aus gegossenem Polyurethan und einer daran ausgebildeten Kraftübertragungszone sowie mit einer Textilauflage in Kontakt zu dieser Kraftübertragungszone, mehrere Verfahren zu dessen Herstellung und ein zugehöriges, mehrschichtig imprägniertes Riementextil.

Textilbeschichtungen auf Riemen, insbesondere Zahnriemen, haben in erster Linie den Sinn, den Abrieb zu vermindern und bei Zahnriemen die Einreißneigung an den Zahnkanten und die Weiterreißneigung bei Schäden in der Zahnaußenkante zu unterdrücken.

Polyurethanriemen werden im Allgemeinen direkt auf die Textilauflage gegossen, so dass das Polyurethan auf der Auflage ausreagiert, vernetzt und fest wird. Dabei dringt es wenigstens teilweise in das Textil ein und durch dieses hindurch. Wenn nun im Laufe des Gebrauchs die abriebfeste und gegebenenfalls reibungsvermindernde Textilauflage etwas abgetragen wird, kommt das Riemenpolyurethan, das in der Regel einen sehr hohen Reibungskoeffizienten besitzt, direkt mit der Kraftübertragungs- bzw. Zahnscheibe in Kontakt, so dass sich die Reibung dort schlagartig erhöht. Dies ist unerwünscht.

Aus der DE 10 2008 055 497 A1 ist es bekannt, bei einem Antriebsriemen einen Haftvermittler zwischen Grundkörper und Textilauflage anzuordnen, um ein zu weites Eindringen des Vulkanisats in die Textilauflage zu vermeiden und eine bessere chemische Anbindung an das Textil zu bewirken. Der Haftvermittler schmilzt bei der Vulkanisation und dringt unter Mitvernetzung in die Textilauflage ein.

Für Polyurethanriemen ist das Verfahren nicht geeignet, da es die an sich gewünschte mechanische Verzahnung zwischen Polyurethan und Textil verhindert und die Haltbarkeit bzw. maximale Laufzeit des Riemens verkürzt.

Aus der EP 1 180 615 A2 ist ein weiteres Beispiel für einen Endlos-Kraftübertragungsriemen bekannt, bei dem auf der Kraftübertragungsseite, insbesondere auf dort ausgebildeten Zähnen eine Textilauflage aufgelegt ist. Eine Beschichtung aus thermoplastischem Material befindet sich zwischen dem Riemenkörper und der Textilauflage, um den Durchtritt von Riemenmaterial durch die Textilauflage an die Riemenoberfläche zu verhindern.

Die WO 2005/080820 A1 offenbart einen ölresistent ausgerüsteten Zahnriemen, der auf der Zahnseite oder beidseitig eine über einer Gewebeauflage aufgebrachte Schutzschicht aus einem Fluorkunststoff im Gemisch mit einem Elastomer besitzt.

Die DE 10 2010 017782 A1 offenbart einen Kraftübertragungsriemen mit einem elastischen Grundkörper aus einer zumindest teilvulkanisierten Kautschukmischung, die neben wenigstens einer Kautschukkomponente und wenigstens einem Füllstoff noch einen bestimmten Reaktivverdünner beinhaltet. In den Beispielen kann auf der Kraftübertragungszone eine Fluorpolymer-getränkte Textilauflage, eine beschichtete Textilauflage oder eine nicht-textile zweischichtige Beschichtung vorgesehen sein.

Weiterhin ist es aus der US 6,296,588 B1 bekannt, bei einem Endlosriemen die Textilauflage mit einer zusätzlichen Schicht aus einem hochschmelzenden Thermoplasten zu versehen. Hierdurch wird ein zusätzlicher Abriebschutz gewährleistet, der jedoch nur solange anhält, bis der Thermoplast auf der Oberfläche durch Abnutzung augetragen ist. Danach kommt es zu einem sehr plötzlichen Reibungsanstieg, sobald Polyurethan, das beim Gießen des Riemens das Textil bis zur Thermoplastschicht durchdrungen hat, an die Oberfläche gelangt.

Um die Reibungserhöhung auszugleichen wurde daher auch schon vorgeschlagen, die Textilauflage zusätzlich gleitend auszurüsten. Dies geschieht vielfach mit PTFE, was jedoch zum Brechen neigt und durch Scheuern der Fasern aneinander während des Gebrauchs zu schnell verloren geht. Derartige Textilien mit zusätzlicher Gleitausrüstung durch PTFE sind beispielsweise aus der WO 03/031700 A1 und der US 2010/0120566 A1 bekannt. Dabei schlägt die US 2010/0120566 A1 vor, in das Gewebe, das PTFE-Fasern enthält, niedrig schmelzende Thermoplastfasern miteinzubinden, die bei Temperaturbelastung aufschmelzen und die PTFE-Fasern fixieren. Da diese Fixierung die PTFE-Fasern umgibt, behindert sie jedoch gleichzeitig die Gleitverbesserung.

Der Erfindung liegt die Aufgabe zugrunde, einen Riemen der eingangs genannten Art so weiterzubilden, dass eine deutliche Laufzeitverbesserung bei über die Laufzeit weitgehend gleichbleibenden Gebrauchseigenschaften erzielt wird. Insbesondere soll die Abriebsfestigkeit des Riementextils gesteigert und eine Erhöhung des Reibungskoeffizienten über die Laufzeit vermieden oder vermindert werden.

Die Aufgabe wird gelöst mit dem Riemen gemäß Anspruch 1, den zugehörigen Herstellungsverfahren gemäß Ansprüchen 8 und 11 und einem erfindungsgemäß ausgerüsteten Riementextil nach Anspruch 15. Weitere vorteilhafte Ausgestaltungen der Erfindung sind in den zugehörigen Unteransprüchen angegeben.

Bei dem erfindungsgemäßen Kraftübertragungsriemen wird das oben genannte Problem gelöst, indem der Riemen an der außenliegenden Oberfläche der Textilauflage eine wenigstens teilweise in das Textil eingedrungene, dort eine Imprägnierung bildende erste Beschichtung aus einem ersten thermoplastischen Material besitzt, wobei weiter auf der ersten Beschichtung eine zweite Beschichtung aus einem zweiten thermoplastischen Material vorhanden ist.

In einer bevorzugten Ausführungsform ist die Schmelztemperatur des zweiten thermoplastischen Materials höher als die des ersten thermoplastischen Materials und bleibt vorzugsweise unter 150 °C, während das erste thermoplastische Material eine Schmelztemperatur von ab 80 °C bis ca. 145 °C besitzt. Der Schmelzpunkt wird beispielsweise mit der dynamischen Differentialkalorimetrie (DDK, englisch = Differential Scanning Calorimetry = DSC) bei Umgebungsdruck bestimmt.

Die Imprägnierung der ersten Beschichtung dient gleichzeitig dazu, eine Sperrzone für das von der anderen Textilseite beim Gießen eindringende Polyurethan zu bilden, dabei zusätzlich, durch Verstärkung des Textils mit einem Zusatzmaterial eine weitere mechanische Verzahnung zwischen Polyurethan und imprägniertem Textil zu ergeben und schließlich die Fasern des Textils an der Riemenoberfläche zu fixieren. Letzteres geschieht unterhalb der zweiten Beschichtung, die vorzugsweise dünn ist und sich im Laufe des Gebrauchs schnell abträgt oder die alternativ vor in Benutzungnehmen des Riemens abgezogen werden kann, wenn die Beschichtungen untereinander peelbar sind.

Die zweischichtige Ausrüstung des Textils, wobei die erste Beschichtung wenigstens teilweise eine Imprägnierung innerhalb der Textilstruktur bildet, bewirkt, dass die zweite Beschichtung, die als Beschichtung mit einem Thermoplastmaterial eine geschlossene Beschichtungsdecke bildet, in jedem Fall verhindert, dass das Polyurethan beim Gießen die Textilauflage vollständig durchdringt oder gar zu deren äußerer Oberfläche gelangt und dort einen Film bildet. Das gegossene Polyurethan wird vielmehr in der imprägnierten Zone zurückgehalten und dringt maximal bis an die äußere Oberfläche der Textilauflage vor, ohne diese vollständig zu durchdringen oder außen auf die Oberfläche zu gelangen.

Die zweite Beschichtung besitzt selbst einen Reibungskoeffizienten, der dem Riemen gute Gebrauchseigenschaften verleiht und in jedem Fall deutlich unter dem Reibungskoeffizienten eines Polyurethans liegt. Der (Gleit-) Reibungskoeffizient der zweiten Beschichtung liegt vorzugsweise unter 0,45 und in jedem Falle vorzugsweise unter 0,3. Es ist kein Nachteil, wenn die zweite Beschichtung dünn ist und durch Abrieb in Gebrauch relativ schnell abgetragen wird.

Nach Abtragen dieser zweiten Beschichtung gelangt das abriebfeste Textil an die Riemenoberfläche, und zwar primär mit seiner mit der ersten Beschichtung imprägnierten Zone. Zwar kann gegossenes Riemenpolyurethan bis in diese Zone vorgedrungen sein, dies ist jedoch nur im relativ geringen Maße der Fall, so dass der hohe Polyurethanreibungskoeffizient durch einen geringen Reibungskoeffizienten des thermoplastischen Materials der zweiten Beschichtung und/oder reibungsvermindernde Eigenschaften des abriebfesten Textils der Textilauflage ausgeglichen werden kann.

Demnach ist vorzugsweise der Reibungskoeffizient der zweiten Beschichtung ebenfalls unter 0,45, weiter vorzugsweise unter 0,3.

Gegebenenfalls können die thermoplastischen Materialien sowohl der ersten als auch der zweiten Beschichtung mit einem reibungsvermindernden Additiv modifiziert sein. Bei dem reibungsvermindernden Additiv kann es sich insbesondere um Polyolefinfluoride wie vorzugsweise PTFE, Polyvinylchlorid, Graphit, Silikon, Molybdändisulfit oder andere bekannte reibungsvermindernde Additive handeln oder um Gemische aus diesen Additiven. Reibungsvermindernde Additive sind dem Fachmann bekannt. Die weitere Additivierung thermoplastischer Materialien, die immer möglich ist, braucht hier nicht näher ausgeführt zu werden.

Vorzugsweise ist das thermoplastische Material der ersten Beschichtung bzw. das erste thermoplastische Material ein Copolyamid.

Unter Copolyamiden werden dabei sowohl Polymere aus mehr als zwei unterschiedlichen Monomertypen, die zu Polyamid polymerisieren, verstanden als auch Mischungen mehrerer solcher Polymere. Die Copolyamide können dabei grundsätzlich aus ein oder mehreren Diaminen in Verbindung mit ein oder mehreren Dicarbonsäuren oder Lactamen, gegebenenfalls in Verbindung mit ein oder mehreren - Aminocarbonsäuren, anderen aminosubstituierten Carbonsäuren usw. bestehen. Nur beispielsweise sind zu nennen: Caprolactam/Hexamethylendiamin/Adipinsäure; Hexamethylendiamin/Adipin-säure/-Se-baccinsäure; Hexamethylendiamin/Tetramethylendiamin/ Adipinsäure; Hexamethylendiamin/Tetramethylendiamin/Acelain-säure; sowie Produkte aus Dicabonsäuren, Diaminen und alpha-Aminocarbonsäuren bzw. Lactamen mit aliphatischen, cycloaliphatischen oder aromatischen Aminen und/oder Carbonsäure, vorzugsweise jeweils mit 6 bis 20 Kohlenstoffatomen je Monomereinheit.

Unter Copolyamiden werden außerdem Mischungen aus mehreren der vorgenannten Copolyamide verstanden.

Weiterhin werden unter Copolyamiden Copolymere aus Polyamideinheiten und weiteren anpolymerisierbaren Einheiten sowie Mischungen aus Copolyamiden, wie oben beschrieben, mit anderen Polymeren verstanden, die jeweils einen Polyamidgehaft von wenigstens 50 Gew.-% aufweisen.

Spezielle Copolyamide, die in Kunstfasertextilien gut einschmelzen und für die Erfindung geeignet sind, sind beispielsweise in DE 32 48 776 A1 und DE 102 12 889 A1 genannt.

Das thermoplastische Material der ersten Beschichtung besitzt vorzugsweise ein Schmelzpunkt zwischen 80 und 145 °C, weiter vorzugsweise zwischen 90 und 145 °C, weiter vorzugsweise zwischen 90 und 135 °C, weiter vorzugsweise zwischen 100 und 135 °C und insbesondere zwischen 100 und 130 °C.

Das thermoplastische Material der ersten Beschichtung liegt bei dem erfindungsgemäßen Kraftübertragungsriemen in der Textilauflage wenigstens größtenteils oder vollständig eingeschmolzen vor, was wie unten noch näher beschrieben durch besondere Herstellungsverfahren bzw. Vorbehandlungsschritte des Textils bewirkt wird. Die zum angrenzenden Polyurethan gewandte Oberfläche der Textiloberfläche bleibt dabei vorzugsweise praktisch frei von dem ersten thermoplastischen Material (dem Imprägnierungsmaterial). Das thermoplastische Material der ersten Beschichtung liegt vorzugsweise mit einem Flächengewicht von bis zu 200 g/m2, vorzugsweise bis zu 100 g/m2 in der Textilauflage vor.

Das zweite thermoplastische Material für die zweite Beschichtung, das vorzugsweise einen Schmelzpunkt unter 150 °C besitzt, weiter vorzugsweise bis maximal 145 °C und insbesondere bis 140 °C, kann beispielsweise ein Polyolefin, wie ein Polyethylen oder Polypropylen sein, ersatzweise ein Polyamid oder ein Polyester. Geeignet sind alle höher schmelzenden thermoplastischen Materialien, die geschlossene Oberflächen bilden, also undurchdringlich für gegossenes Polyurethan sind, und die relativ niedrige Reibungskoeffizienten, wie oben genannt vorzugsweise im Bereich unter 0,45 besitzen. Geeignete Materialien sind insbesondere high-density-Polyethylene und andere kristalline oder teilkristalline homopolymere Polyolefine.

Gemäß einer besonders bevorzugten Ausführungsform kann zwischen der ersten Beschichtung und der zweiten Beschichtung der Textilauflage eine dritte Schicht als Zwischenschicht angeordnet sein. Dabei handelt es sich vorzugsweise um eine Haftvermittlerschicht zwischen dem ersten und dem zweiten thermoplastischen Material.

Bei der Zwischenschicht kann es sich vorzugsweise um eine Haftvermittlerschicht handeln, die eine Haftvermittlung zwischen der ersten Beschichtung und der zweiten Beschichtung bewirkt. Falls es sich bei der ersten Beschichtung um ein Copolyamid und bei der zweiten Beschichtung um ein Polyolefin, insbesondere HDPE handelt, kann die Zwischenschicht beispielsweise aus LDPE oder modifiziertem LDPE bestehen. Geeignete Haftvermittler für HDPE sind dem Fachmann bekannt. Die Modifikation des LDPE kann eine Maleinsäuremodifikation sein.

Alternativ kann anstelle der Haftvermittlerschicht eine gegen Copolyamid oder HDPE peelfähige Schicht vorgesehen sein.

Die zweite Beschichtung besitzt eine Dicke bis 200 µm, vorzugsweise bis 100 µm. Sie ist vorzugsweise dünn und besitzt in besonders bevorzugter Ausführungsform eine Dicke von vorzugsweise 10 bis 50 µm. In diesen bevorzugten Ausführungsformen ist vorgesehen, dass die dünnen zweiten Beschichtungen auf dem Kraftübertragungsriemen verbleiben und schnell abgetragen werden, während in anderen Ausführungsformen die dicken zweiten Beschichtungen vorzugsweise vor Gebrauch entfernt werden, beispielsweise peelend abgezogen.

Das Textil der Textilauflage kann ein Gewebe, ein Gewirk, ein Gestrick oder ein Vlies sein, bevorzugt ist ein Gewebe. Es kann sich dabei um übliche Riementextilien handeln, wie sie dem Fachmann bekannt sind. Bevorzugt sind Textilien aus Kunstfasern oder einem Kunstfasergemisch, wobei die Textilauflage aus diesen Fasern besteht oder sie enthält. Besonders bevorzugte Kunstfasermaterialien bestehen aus Polyamid oder Polyester oder enthalten solche Fasern, beispielsweise Polyamid 6.6, Meta-Aramid, Para-Aramid, Nylon 4.6, wobei eine Ausrüstung mit reibungsvermindernden Materialien, wie Polytetrafluorethylen (PTFE) vorgesehen sein kann. Dabei sind vorzugsweise PTFE-Fäden in das Textil mit eingebunden, wie beispielsweise in der WO 03/031700 A1 gezeigt.

Die Verwendung eines PTFE-Fäden oder -filamente enthaltenden Riementextils ist bei dem Kraftübertragungsriemen nach der Erfindung besonders vorteilhaft, weil die Imprägnierungszone der ersten Beschichtung gemeinsam mit dem PTFE-haltigen Textil eine besonders hohe Abriebfestigkeit erzeugt. Zwar können geringe Mengen Polyurethan bis in diese Zone vorgedrungen sein. Der nachteilige Effekt auf den Reibungskoeffizienten wird jedoch durch das gegebenenfalls reibungsvermindernd modifizierte thermoplastische Material der ersten Beschichtung in Verbindung mit den Polytetrafluorethylen-Fasern aus dem Textil mehr als ausgeglichen. Weiterhin bewirkt die gute Fixierung der PTFE-Fasern in dieser Zone - unter Einwirkung der Thermoplastimprägnierung und gegebenenfalls des zusätzlich verfestigenden Polyurethans, das die PTFE-Fasern ohne Durchbruch oder innerer Reibung verloren zu gehen, über die gesamte Laufzeit ihre reibungsvermindernde Wirkung voll entfalten können. Die dadurch erzielten Vorteile sind erstaunlich.

Der Kraftübertragungsriemen kann grundsätzlich jedem bekannten Typ entsprechen und insbesondere ein Flachriemen, Keilriemen oder Zahnriemen sein. Zahnriemen sind besonders bevorzugt, da hier die Vorteile des Riementextils besonders zum Tragen kommen.

Die Erfindung umfasst weiterhin Verfahren zur Herstellung der mehrschichtigen Textilausrüstung.

Gemäß einem ersten Aspekt der Erfindung wird vor dem Gießen des Polyurethans auf die Textilauflage eine erste und eine zweite Beschichtung nacheinander auf eine Oberfläche der Textilauflage übereinander aufgebracht, wobei wenigstens die erste Beschichtung thermisch fixiert wird, so dass die erste Beschichtung wenigstens teilweise, d.h. vorzugsweise zu wenigstens 50 % ihres Gewichts, in die Textilauflage eindringt und diese Oberfläche imprägniert, und dass das Polyurethan in einem weiteren Schritt auf die entgegengesetzte Oberfläche der Textilauflage aufgegossen wird.

Im Übrigen wird der Riemen in bekannter Weise hergestellt. Die mit dem Verfahren vorbereitete Textilauflage wird gewendet und in eine entsprechende Form eingelegt, so dass die zweifach beschichtete Seite in der Form unten liegt, während die nicht imprägnierte Seite oben liegt. Das Polyurethan wird auf die Textilauflage auf die nicht imprägnierte Seite aufgegossen und härtet dort in der gewünschten Form aus. Das Polyurethan der Kraftübertragungszone kann wie üblich das Polyurethan des gesamten Unterbaus bilden. Es kann gleichzeitig die Zugträger einbinden, sofern hierfür nicht eine gesonderte Mischung vorgesehen ist. Der Riemen wird dann wie üblich weiter aufgebaut und kann gegebenenfalls eine zweite Abdeckung auf dem Riemenrücken besitzen.

In welcher Form die thermoplastischen Materialien auf die Textilauflage aufgebracht werden, und zwar auf die spätere Außenseite, ist zunächst beliebig. Die thermoplastischen Materialien können in Lösungsmittel gelöst, aufgestrichen oder aufgerakelt werden oder als Pulver bzw. Granulat aufgestreut und thermisch fixiert werden. Diese Verfahrensweisen sind jedoch nicht bevorzugt.

Bevorzugt ist es, die ersten und zweiten Beschichtungen als Folien auf die Textilauflage aufzubringen und dort zu fixieren. Dies geschieht im Allgemeinen mit Wärme, wobei die Folie für die erste Beschichtung schmilzt oder anschmilzt und dabei in die Textilstruktur der Textilauflage eindringt. Das Aufbringen der Beschichtungen kann mit Druck unterstützt werden. Hierbei ist es möglich, bei geringerer Temperatur mit höherem Druck zu arbeiten oder bei etwas höherer Temperatur und niedrigerem Druck. Auch eine Unterstützung der Fixierung durch Unterdruck von der Textilunterseite her, ist möglich.

In einer bevorzugten Ausführungsform wird zunächst die erste Beschichtung aufgebracht, vorzugsweise in Form einer Folie, und fixiert. Auf die erste Beschichtung wird dann die zweite Beschichtung in Form einer weiteren Folie aufgebracht. Die Fixierung der zweiten Folie auf der ersten kann mit Hilfe von Haftvermittler erfolgen. Vorzugsweise kann die zweite Folie aus der Folie für die zweite Beschichtung und einer Haftvermittlerschicht bestehen, wobei diese zweite zweischichtige Folie dann mit der Haftvermittlerseite auf die erste Beschichtung aufgelegt und dort thermisch fixiert wird.

Gemäß einem weiteren Aspekt der Erfindung wird das Verfahren so geführt, dass auf eine Oberfläche der Textilauflage vor dem Gießen des Polyurethans eine wenigstens zweischichtige Folie aufgebracht wird, wobei eine erste, dem Textil zugewandte Schicht dieser Folie einen Schmelzpunkt von ab 80 °C bis ca. 145 °C besitzt und eine zweite Textil abgewandte Schicht der Folie einen höheren Schmelzpunkt als die erste besitzt, und dass die Folie auf der Textilauflage thermisch fixiert wird, so dass die erste Folienschicht wenigstens teilweise - vorzugsweise zu wenigstens 50 % ihres Gewichts - in das Textil einschmilzt, während die Schicht das imprägnierte Textil abdeckt. Die zweite Schicht schmilzt dabei nicht oder nicht wesentlich in das Textil ein. Die Eigenschaften der Schichten können so sein, wie oben bereits für die Beschichtungen beschrieben.

Das vorbereitete Textil wird, wie in dem oben schon beschriebenen Verfahren, weiter verwendet, d.h. das Polyurethan wird von der nicht beschichteten Seite her aufgegossen.

Die Mehrschichtfolie gemäß dem zuletzt genannten Verfahrensaspekt wird vorzugsweise ganz oder teilweise als coextrudierte Mehrschichtfolie bereitgestellt und auf der Textilauflage aufgebracht. Bei einer dreischichtigen Folie können zwei oder drei Schichten coextrudiert sein.

Wenn die Mehrschichtfolie dreischichtig ist, besitzt sie vorzugsweise zwischen der ersten und zweiten Schicht eine Haftvermittlerschicht als Zwischenschicht. Die Haftvermittlerschicht wurde oben schon beschrieben.

Gemäß einer besonders bevorzugten Ausführungsform ist vorgesehen, dass die zweite Schicht von der ersten peelbar ist. Die zweite Schicht oder mehrere außenliegende Schichten werden dann unter Zurücklassen der ersten Schicht als imprägnierende Beschichtung auf der Textilauflage von dem Riemen nach Gießen des Polyurethans abgezogen. Die zweite Beschichtung dient in erster Linie dem Zweck, ein vollständiges Durchdringen des Polyurethans bis auf die Oberfläche der Textilauflage durch die erste Imprägnierung hindurch zu vermeiden. Nachdem dieser Zweck erfüllt ist und dass Riemenpolyurethan ausgehärtet ist, kann die zweite Schicht entfernt werden. Die Vorteile der Imprägnierung mit der ersten Beschichtung wurden oben schon beschrieben.

Die Erfindung umfasst weiterhin ein Riementextil, insbesondere ein Zahnriementextil, für die Verwendung als Textilauflage in einem erfindungsgemäßen Kraftübertragungsriemen.

Das erfindungsgemäße Riementextil ist ein Kunstfasertextil, welches gegebenenfalls Beimischungen anderer Fasern, z.B. von Naturfasern, wie Baumwollfasern, enthalten kann. Vorzugsweise ist die Summe der Beimischungen maximal 40 Vol.-%. Dieses erfindungsgemäße Riementextil trägt eine wenigstens zweischichtige Beschichtung mit einem ersten, wenigstens teilweise in das Textil eingedrungenen ersten thermoplastischen Material, das einen Schmelzpunkt ab 80 °C bis ca. 145 °C, vorzugsweise ab 90 °C bis ca. 145 °C, weiter vorzugsweise ab 90 °C bis ca. 135 °C, insbesondere 100 bis 130 °C besitzt und einem zweiten, an der Riemenoberfläche liegenden thermoplastischen Material mit einem Schmelzpunkt, der höher ist als der des ersten thermoplastischen Materials und vorzugsweise kleiner 150 °C ist.

Die Eigenschaften der beiden Beschichtungen und zugehörigen Materialien wurden vorstehend bereits beschrieben.

Im Folgenden wird die Erfindung anhand eines in der Zeichnung dargestellten Ausführungsbeispiels näher beschrieben.

In der Zeichnung zeigen:
- Figur 1 -: eine Textilauflage mit aufgelegter, dreischichtiger Folie aus thermoplastischen Materialien;
- Figur 2 -: die Textilauflage aus Figur 1 mit aufgeschmolzener Mehrschichtfolie und dabei eingeschmolzener erster Schicht;
- Figur 3 -: die Textilauflage aus Figur 2, gewendet, mit aufgegossenem Polyurethan;
- Figur 4 -: die Textilauflage aus Figur 2 mit aufgegossenem Polyurethan nach Abziehen der äußeren beiden Schichten der Mehrschichtfolie.
- Figur 5a) bis 5c) -: schematische Darstellung von Standardriemen, an denen die Erfindung verwirklicht sein kann; a) Keilriemen; b) Zahnriemen; c) Bandriemen.

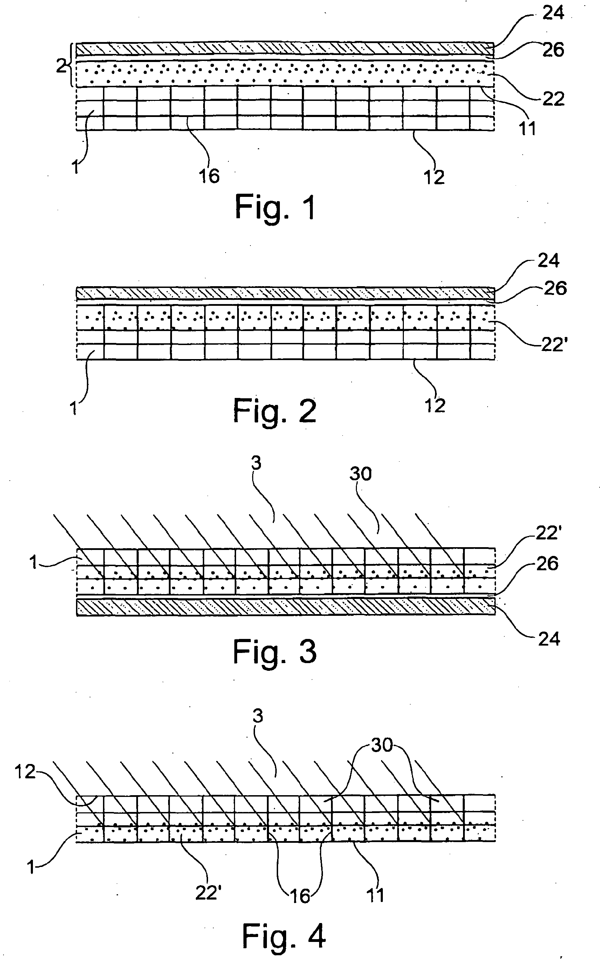

Figur 1 zeigt eine Prinzipskizze eines Querschnitts durch eine Textilauflage (1), auf die eine dreischichtige Folie (2) aus den Folienschichten (22, 24, 26) aufgelegt ist. Der Textilauflage (1) zugewandet und auf deren erste Oberfläche (11), der späteren äußeren Oberfläche des Kraftübertragungsriemens, aufliegend, befindet sich eine erste Schicht (22) aus einem ersten thermoplastischen Material, die nach Fixieren der Mehrschichtfolie (2) die erste Beschichtung mit einer in Figur 2 noch näher dargestellten Imprägnierungszone bilden wird. Die zweite Schicht (24) ist eine auch nach Fixierung der Mehrschichtfolie geschlossene thermoplastische Deckschicht und die Schicht (26) ist eine Zwischenschicht, hier eine Haftvermittlerschicht zum Copolyamid der Schicht (22), die ein Peelen gegen Schicht (24) erlaubt.

Figur 2 zeigt das in Figur 1 dargestellte Ausführungsbeispiel, nach Anwenden von Wärme und gegebenenfalls Druck auf die Oberfläche der Mehrschichtfolie. Die erste Schicht (22) schmilzt dabei in die Textilauflage (1) ein, so dass sich das thermoplastische Material (22') dieser ersten Schicht in einer Oberflächenzone der Textilauflage (1) verteilt und eine Imprägnierungszone bildet. Diese Imprägnierungszone reicht nicht bis zur entgegengesetzten Oberfläche (12) der Textilauflage (1).

Figur 3 zeigt das Beispiel aus Figur 2 gewendet. Und nach Aufgießen des Polyurethans (30), das eine an die Textilauflage (1) angrenzende Kraftübertragungszone (3) eines nicht näher dargestellten Kraftübertragungsriemen bildet.

Das Riemenpolyurethan durchdringt die Textilauflage (1) und weitgehend auch die Imprägnierungszone, in der das Textil mit dem ersten thermoplastischen Material (22') getränkt ist. Die Schichten (26 und 24) verhindern jedoch, dass das Polyurethan vollständig durch die Textilauflage (1) durchdringt oder sich gar auf dessen Oberfläche verteilen könnte. Sofern die Mehrschichtfolie (2) unter Druck auf die Textilauflage (1) aufgepresst wurde, kann eine zusätzliche oberflächliche Verdichtung des Textilmaterials der Textilauflage (1) erfolgt sein, was das Polyurethan zusätzlich zurückhält und eine polyurethanfreie verdichtete Oberfläche bereitstellt.

Im nächsten Schritt werden die Schichten (24 und 26) entfernt. Figur 4 zeigt die Textilauflage (1) in Kontakt mit der Kraftübertragungszone (3) des nicht dargestellten Kraftübertragungsriemens. Die Textilauflage (1) ist im Grenzbereich vom Polyurethan (30) durchdrungen, das sich jedoch nicht vollständig bis zur äußeren Oberfläche (11) erstreckt, an der zuvor die Schichten (26 und 24) oberflächlich gebunden waren. Die Imprägnierungszone, in der sich das erste thermoplastische Material (22') befindet, ist teilweise vom Polyurethan durchdrungen. Das thermoplastische Material (22') dient der Fixierung der Fasern (16) des Textilgewebes über den gesamten Bereich der Imprägnierungszone.

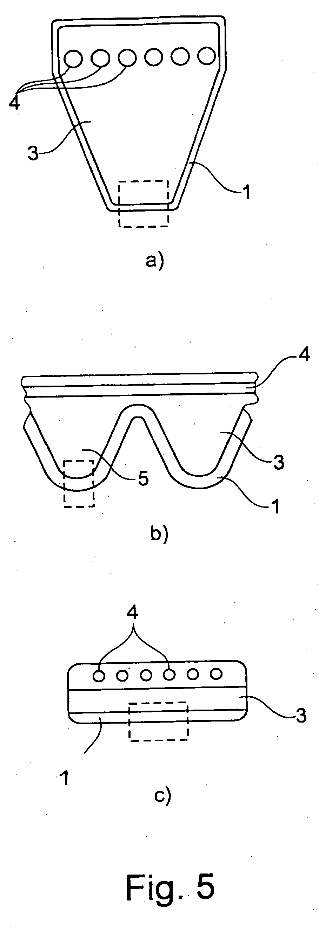

Figuren 5a) bis 5c) zeigen die Anwendung der Erfindung bei Standardriemen. Die Textilauflage (1) deckt jeweils die Kraftübertragungszonen 3 der Riemenunterbauten ab. Gezeigt ist außerdem die riementypische Anordnung von Festigkeitsträgern 4. Figur 5a) zeigt einen Keilriemen mit vollständiger Textilummantelung. Die Textilauflage 1 umschließt den Riemen vollständig. Figur 5b) zeigt einen Zahnriemen mit in Querrichtung angeordneten Zähnen 5 und längsverlaufenden Festigkeitsträgern 4. Hier deckt die Textilauflage (1) die gesamten Zahnflächen mit Tälern, Spritzen und Flanken ab. Figur 5c) zeigt einen Flachriemen, dessen Textilauflage (1) auf die Innenfläche begrenzt ist. Figuren 1 bis 3 zeigen Ausschnittsbereiche, die den gestrichelten in Figuren 5 entsprechen.

In der Praxis bewirkt die Faserfixierung eine wesentliche Erhöhung der Laufzeiten des Riemens. Die Eigenschaften des Riemens bleiben daher lange Zeit unverändert.

### Materialangaben

Es wurde ein Polyurethanzahnriemen in folgender Weise ausgerüstet:

### Textilauflage:

Kette und Schuss aus PA 6.6; Gewicht 275 g/m2;
2x2 Twillbindung; Textil-Dehnfähigkeit: 80 %
bei einer Belastung mit 20 Newton (Breite des Probestücks 25 mm)

### Folienauflage, mehrschichtig:

von der Textilauflage ausgehend in dieser Reihenfolge aufeinanderliegend:
- 1.: Copolyamidfolie, 50 µm, Schmelzpunkt: 110 - 120 °C;
- 2.: ModPE, 100 µm;
- 3.: HDPE, 100 µm.

## Patentansprüche

1. Kraftübertragungsriemen mit einem Unterbau aus Polyurethan (30) und einer daran ausgebildeten Kraftübertragungszone (3) sowie einer Textilauflage (1) in Kontakt zur Kraftübertragungszone (3), **dadurch gekennzeichnet, dass** der Riemen an der außen liegenden Oberfläche (11) der Textilauflage (1) eine wenigstens teilweise in das Textil eingedrungene, dort eine Imprägnierung bildende erste Beschichtung (22) aus einem ersten thermoplastischen Material (22') mit einer Schmelztemperatur von ab 80 °C bis ca. 145 °C besitzt und auf der ersten Beschichtung (22) eine zweite Beschichtung (26) aus einem zweiten thermoplastischen Material besitzt, wobei die Schmelztemperatur des zweiten thermoplastischen Materials höher ist als die des ersten thermoplastischen Materials.

2. Kraftübertragungsriemen nach Anspruch 1, **dadurch gekennzeichnet, dass** die erste und/oder die zweite Beschichtung (22, 24) mit einem reibungsvermindernden Additiv modifiziert ist/sind.

3. Kraftübertragungsriemen nach Anspruch 1 oder 2, **dadurch gekennzeichnet, dass** das erste thermoplastische Material (22') ein Copolyamid ist.

4. Kraftübertragungsriemen nach einem der Ansprüche 1 bis 3, **dadurch gekennzeichnet, dass** zwischen der ersten Beschichtung (22) und der zweiten Beschichtung (24) eine dritte Schicht als Zwischenschicht (26) angeordnet ist, vorzugsweise eine Haftvermittlerschicht.

5. Kraftübertragungsriemen nach einem der Ansprüche 1 bis 4, **dadurch gekennzeichnet, dass** die zweite Beschichtung (24) eine Dicke von bis zu 300 µm besitzt.

6. Kraftübertragungsriemen nach einem der Ansprüche 1 bis 5, **dadurch gekennzeichnet, dass** die zweite Beschichtung (24) peelbar ist, ggf. einschließlich der Zwischenschicht.

7. Kraftübertragungsriemen nach einem der Ansprüche 1 bis 6, **dadurch gekennzeichnet, dass** der Riemen ein Zahnriemen ist.

8. Verfahren zur Herstellung eines Kraftübertragungsriemens nach einem der Ansprüche 1 bis 7, mit einem Unterbau aus gegossenem Polyurethan (30) und einer daran ausgebildeten Kraftübertragungszone (3) sowie einer Textilauflage (1) in Kontakt zur Kraftübertragungszone (3), **dadurch gekennzeichnet, dass** vor dem Gießen des Polyurethans (30) auf die Textilauflage (1) eine erste und eine zweite Beschichtung (22, 24) nacheinander auf eine Oberfläche (11) der Textilauflage übereinander aufgebracht werden, wobei wenigstens die erste Beschichtung (22) thermisch fixiert wird, so dass die erste Beschichtung wenigstens teilweise in die Textilauflage (1) eindringt und diese oberflächlich imprägniert, und das das Polyurethan (30) in einem weiteren Schritt auf die entgegengesetzte Oberfläche (12) der Textilauflage (1) aufgegossen wird.

9. Verfahren nach Anspruch 8, **dadurch gekennzeichnet, dass** die ersten und zweiten Beschichtungen (22, 24) als Folien auf die Textilauflage aufgebracht und dort fixiert werden.

10. Verfahren nach Anspruch 8 oder 9, **dadurch gekennzeichnet, dass** die zweite Beschichtung (24) auf der ersten mit Hilfe eines Haftvermittlers fixiert wird.

11. Verfahren zur Herstellung eines Kraftübertragungsriemens nach einem der Ansprüche 1 bis 7, mit einem Unterbau aus gegossenem Polyurethan (30) und einer daran ausgebildeten Kraftübertragungszone (3) sowie einer Textilauflage (1) in Kontakt zur Kraftübertragungszone (3), **dadurch gekennzeichnet, dass** auf eine Oberfläche (11) der Textilauflage (1) vor dem Gießen des Polyurethans eine wenigstens zweischichtige Folie (2) aufgebracht wird, wobei eine erste, dem Textil zugewandte Schicht der Folie (2) einen Schmelzpunkt von ab 80 °C bis ca. 145 °C besitzt und eine zweite, dem Textil abgewandte Schicht der Folie (2) einen höheren Schmelzpunkt als die erste besitzt, und dass die Folie (2) auf der Textilauflage (1) thermisch fixiert wird, so dass die erste Folienschicht wenigstens teilweise (BE zu wenigstens 50 % ihres Gewichts) in das Textil einschmilzt, während die zweite Schicht das imprägnierte Textil abdeckt (BE selbst nicht oder nicht wesentlich einschmilzt), und dass das Polyurethan (30) in einem weiteren Schritt auf die entgegengesetzte Oberfläche (12) der Textilauflage (1) aufgegossen wird.

12. Verfahren nach Anspruch 11, **dadurch gekennzeichnet, dass** die Schichten als coextrudierte Mehrschichtfolie(n) bereitgestellt und auf die Textilauflage (1) aufgebracht werden.

13. Verfahren nach Anspruch 11 oder 12, **dadurch gekennzeichnet, dass** die Mehrschichtfolie (2) dreischichtig ist und sich zwischen erster und zweiter Schicht vorzugsweise eine Haftvermittlerschicht als Zwischenschicht (26) befindet.

14. Verfahren nach einem der Ansprüche 8 bis 13, **dadurch gekennzeichnet, dass** die zweite Schicht oder mehrere außen liegende Schichten unter Zurücklassen der ersten Schicht als imprägnierender Beschichtung auf der Textilauflage (1) von dem Riemen nach Gießen des Polyurethans (30) abgezogen wird/werden.

15. Riementextil für die Verwendung als Textilauflage in einem Kraftübertragungsriemen nach einem der Ansprüche 1 bis 7, **dadurch gekennzeichnet, dass** das Textil ein Kunstfasertextil ist, ggf. mit Beimischung anderer Fasern, das eine wenigstens zweischichtige Beschichtung (22, 24) trägt mit einem ersten, wenigstens teilweise in das Textil eingedrungenen ersten thermoplastischen Material (22'), das einen Schmelzpunkt ab 80 °C bis ca. 145 °C besitzt, und einem zweiten, an der Riemenoberfläche liegenden thermoplastischen Material mit einem Schmelzpunkt, der höher ist als der des ersten thermoplastischen Materials.

16. Riementextil nach Anspruch 15, **dadurch gekennzeichnet, dass** das erste thermoplastische Material ein Copolyamid ist, vorzugsweise ein mit einem reibvermindernden Additiv versehenes Copolyamid.

17. Riementextil nach Anspruch 15 oder 16, **dadurch gekennzeichnet, dass** zwischen der ersten und der zweiten Schicht der Beschichtung (22, 24) eine Zwischenschicht (26), beispielsweise eine Haftvermittlerschicht, vorhanden ist.

18. Riementextil nach einem der Ansprüche 15 bis 17, **dadurch gekennzeichnet, dass** die zweite oder mehrere außen liegende Schichten von der ersten Schicht peelbar ist/sind.

## Claims

1. Power transmission belt having a bottom section of polyurethane (30) with a power transmission zone (3)and also having a textile overlay (1) in contact with the power transmission zone (3), **characterized in that** the belt possesses a first coating (22) of a first thermoplastic material (22') having a melting temperature of from 80°C to about 145°C on the exteriorally lying surface (11) of the textile overlay (1), the first coating (22) having at least partly penetrated into the textile to form an impregnation therein, and possesses on the first coating (22) a second coating (26) of a second thermoplastic material, wherein the melting temperature of the second thermoplastic material is higher than that of the first thermoplastic material.

2. Power transmission belt according to Claim 1, **characterized in that** a friction-reducing additive modifies the first and/or second coatings (22, 24).

3. Power transmission belt according to Claim 1 or 2, **characterized in that** the first thermoplastic material (22') is a copolyamide.

4. Power transmission belt according to any of Claims 1 to 3, **characterized in that** between the first coating (22) and the second coating (24) there is disposed a third layer as interlayer (26), preferably an adhesion promoter layer.

5. Power transmission belt according to any of Claims 1 to 4, **characterized in that** the second coating (24) possesses a thickness of up to 300 µm.

6. Power transmission belt according to any of Claims 1 to 5, **characterized in that** the second coating (24) is peelable, optionally inclusive the interlayer.

7. Power transmission belt according to any of Claims 1 to 6, **characterized in that** the belt is a toothed belt.

8. Process for producing a power transmission belt according to any of Claims 1 to 7, having a bottom section of cast polyurethane (30) with a power transmission zone (3) and also having a textile overlay (1) in contact with the power transmission zone (3), **characterized in that** the casting of the polyurethane (30) onto the textile overlay (1) is preceded by the successive application of first and second coatings (22, 24) to a surface (11) of the textile overlay in superposition thereon, wherein at least the first coating (22) is thermally fixed, so the first coating penetrates at least partially into the textile overlay (1) and impregnates same superficially, and **in that** the polyurethane (30) is cast in a further step onto the opposite surface (12) of textile overlay (1).

9. Process according to Claim 8, **characterized in that** the first and second coatings (22, 24) are applied and fixed on the textile overlay in the form of foils.

10. Process according to Claim 8 or 9, **characterized in that** the second coating (24) is fixed on the first one by means of an adhesion promoter.

11. Process for producing a power transmission belt according to any of Claims 1 to 7, having a bottom section of cast polyurethane (30) with a power transmission zone (3) and also having a textile overlay (1) in contact with the power transmission zone (3), **characterized in that** an at least two-layered foil (2) is applied to a surface (11) of textile overlay (1) before the polyurethane casting, wherein a first layer of foil (2) faces the textile and possesses a melting point of from 80°C to about 145°C and a second layer of foil (2) faces away from the textile and possesses a higher melting point than the first one, and **in that** the foil (2) is thermally fixed on the textile overlay (1), so the foil's first layer melts at least partially (BE at not less than 50% of its weight) into the textile, while the second layer covers (BE does not itself melt or melt significantly into) the impregnated textile, and **in that** the polyurethane (30) is cast in a further step onto the opposite surface (12) of textile overlay (1).

12. Process according to Claim 11, **characterized in that** the layers are provided, and applied to the textile overlay (1), in the form of (a) coextruded multilayered foil(s).

13. Process according to Claim 11 or 12, **characterized in that** the multilayered foil (2) is three layered and it is preferably an adhesion promoter layer which is situated between the first and second layers as an interlayer (26).

14. Process according to any of Claims 8 to 13, **characterized in that** the second layer or two or more exteriorally lying layers is/are peeled off the belt after casting polyurethane (30) to leave behind the first layer as an impregnating coating on the textile overlay (1).

15. Belt textile for use as textile overlay in a power transmission belt according to any of Claims 1 to 7, **characterized in that** the textile is a manufactured-fiber textile, optionally with admixture of other fibers, which bears an at least two-layered coating (22, 24) with a first thermoplastic material (22') which possesses a melting point from 80°C to about 145°C and has at least partially penetrated into the textile, and a second thermoplastic material which is at the belt surface and has a melting point that is higher than that of the first thermoplastic material.

16. Belt textile according to Claim 15, **characterized in that** the first thermoplastic material is a copolyamide, preferably a copolyamide comprising a friction-reducing additive.

17. Belt textile according to Claim 15 or 16, **characterized in that** between the first and second layers of the coating (22, 24) there is disposed an interlayer (26), for example an adhesion promoter layer.

18. Belt textile according to any of Claims 15 to 17, **characterized in that** the second layer or more than two exteriorally lying layers is/are peelable from the first layer.

## Revendications

1. Courroie de transmission de force avec une base en polyuréthane (30) et une zone de transmission de force (3) formée sur celle-ci ainsi qu'avec une couche textile (1) en contact avec la zone de transmission de force (3), **caractérisée en ce que** la courroie comporte, sur la surface (11) de la couche textile (1) située à l'extérieur un premier revêtement (22) ayant pénétré au moins partiellement dans le textile et y formant une imprégnation, en un premier matériau thermoplastique (22') présentant une température de fusion de 80°C à environ 145°C, et comporte sur le premier revêtement (22) un deuxième revêtement (26) en un deuxième matériau thermoplastique, dans lequel la température de fusion du deuxième matériau thermoplastique est plus élevée que celle du premier matériau thermoplastique.

2. Courroie de transmission de force selon la revendication 1, **caractérisée en ce que** le premier et/ou le deuxième revêtement(s) (22, 24) est/sont modifié(s) au moyen d'un additif réduisant le frottement.

3. Courroie de transmission de force selon la revendication 1 ou 2, **caractérisée en ce que** le premier matériau thermoplastique (22') est un copolyamide.

4. Courroie de transmission de force selon l'une quelconque des revendications 1 à 3, **caractérisée en ce qu'**une troisième couche (26), de préférence une couche d'agent adhésif, est disposée comme couche intermédiaire (26) entre le premier revêtement (22) et le deuxième revêtement (24).

5. Courroie de transmission de force selon l'une quelconque des revendications 1 à 4, **caractérisée en ce que** le deuxième revêtement (24) présente une épaisseur jusqu'à 300 µm.

6. Courroie de transmission de force selon l'une quelconque des revendications 1 à 5, **caractérisée en ce que** le deuxième revêtement (24) est pelable, éventuellement y compris la couche intermédiaire.

7. Courroie de transmission de force selon l'une quelconque des revendications 1 à 6, **caractérisée en ce que** la courroie est une courroie dentée.

8. Procédé de fabrication d'une courroie de transmission de force selon l'une quelconque des revendications 1 à 7, avec une base en polyuréthane coulé (30) et une zone de transmission de force (3) formée sur celle-ci ainsi qu'avec une couche textile (1) en contact avec la zone de transmission de force (3), **caractérisé en ce que**, avant la coulée du polyuréthane (30) sur la couche textile (1), on dépose un premier et un deuxième revêtements (22, 24) l'un après l'autre sur une surface (11) de la couche textile, dans lequel on fixe thermiquement au moins le premier revêtement (22), de telle manière que le premier revêtement pénètre au moins partiellement dans la couche textile (1) et imprègne celle-ci en surface, et **en ce que** l'on coule le polyuréthane (30) dans une autre étape sur la surface opposée (12) de la couche textile (1).

9. Procédé selon la revendication 8, **caractérisé en ce que** l'on dépose les premier et deuxième revêtements (22, 24) sous forme de feuilles sur la couche textile et on les y fixe.

10. Procédé selon la revendication 8 ou 9, **caractérisé en ce que** l'on fixe le deuxième revêtement (24) sur le premier à l'aide d'un agent adhésif.

11. Procédé de fabrication d'une courroie de transmission de force selon l'une quelconque des revendications 1 à 7, avec une base en polyuréthane coulé (30) et une zone de transmission de force (3) formée sur celle-ci ainsi qu'avec une couche textile (1) en contact avec la zone de transmission de force (3), **caractérisé en ce que**, avant la coulée du polyuréthane, on dépose sur une surface (11) de la couche textile (1) une feuille (2) en au moins deux couches, dans lequel une première couche de la feuille (2) tournée vers le textile présente un point de fusion de 80°C à environ 145°C et une deuxième couche de la feuille (2) opposée au textile présente un point de fusion plus élevé que la première, et **en ce que** l'on fixe la feuille (2) thermiquement sur la couche textile (1), de telle manière que la première couche de la feuille se fonde au moins partiellement (de préférence à raison d'au moins 50 % de son poids) dans le textile, tandis que la deuxième couche recouvre le textile imprégné (de préférence même s'il n'y est pas ou pas essentiellement fondu), et **en ce que** l'on coule le polyuréthane (30) dans une autre étape sur la surface opposée (12) de la couche textile (1).

12. Procédé selon la revendication 11, **caractérisé en ce que** l'on prépare les couches sous la forme d'une/de feuille(s) multicouche coextrudée(s) et on les dépose sur la couche textile (1).

13. Procédé selon la revendication 11 ou 12, **caractérisé en ce que** la feuille multicouche (2) est à trois couches et il se trouve de préférence une couche d'agent adhésif comme couche intermédiaire (26) entre la première et la deuxième couches.

14. Procédé selon l'une quelconque des revendications 8 à 13, **caractérisé en ce que** l'on retire la deuxième couche ou plusieurs couches disposées à l'extérieur de la courroie après la coulée du polyuréthane (30) en laissant la première couche comme revêtement d'imprégnation sur la couche textile (1).

15. Textile pour courroie à utiliser comme couche textile dans une courroie de transmission de force selon l'une quelconque des revendications 1 à 7, **caractérisé en ce que** le textile est un textile de fibres synthétiques, éventuellement en mélange avec d'autres fibres, qui porte un revêtement en au moins deux couches (22, 24) avec un premier matériau thermoplastique (22') ayant pénétré au moins en partie dans le textile et présentant un point de fusion de 80°C à environ 145°C, et un deuxième matériau thermoplastique situé sur la surface de la courroie, avec un point de fusion qui est plus élevé que celui du premier matériau thermoplastique.

16. Textile pour courroie selon la revendication 15, **caractérisé en ce que** le premier matériau thermoplastique est un copolyamide, de préférence un copolyamide doté d'un additif réduisant le frottement.

17. Textile pour courroie selon la revendication 15 ou 16, **caractérisé en ce qu'**il se trouve entre la première et la deuxième couches du revêtement (22, 24) une couche intermédiaire (26), par exemple une couche d'agent adhésif.

18. Textile pour courroie selon l'une quelconque des revendications 15 à 17, **caractérisé en ce que** la deuxième couche ou plusieurs couches situées à l'extérieur est/sont pelables de la première couche.
